(19) Europäisches Patentamt
European Patent Office
Office européen des brevets

(11) **EP 2 183 198 B1**

(12) **FASCICULE DE BREVET EUROPEEN**

(45) Date de publication et mention de la délivrance du brevet:
**11.10.2017 Bulletin 2017/41**

(21) Numéro de dépôt: **08828281.9**

(22) Date de dépôt: **21.08.2008**

(51) Int Cl.:
***C04B 35/484*** *(2006.01)*      ***C03B 5/43*** *(2006.01)*

(86) Numéro de dépôt international:
**PCT/FR2008/051516**

(87) Numéro de publication internationale:
**WO 2009/027611 (05.03.2009 Gazette 2009/10)**

(54) **REFRACTAIRE A FORTE TENEUR EN ZIRCONE ET TENEUR EN SILICE ELEVEE**

FEUERFESTES MATERIAL MIT HOHEM ZIRKONANTEIL UND HOHEM KIESELSÄUREANTEIL

REFRACTORY MATERIAL HAVING HIGH ZIRCONIA CONTENT AND HIGH SILICA CONTENT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.08.2007 FR 0757171**

(43) Date de publication de la demande:
**12.05.2010 Bulletin 2010/19**

(73) Titulaire: **Saint-Gobain Centre de Recherches et d'Etudes Européen 92400 Courbevoie (FR)**

(72) Inventeurs:
• **CABODI, Isabelle**
  **F-84300 Cavaillon (FR)**
• **GAUBIL, Michel**
  **F-30133 Les Angles (FR)**

(74) Mandataire: **Nony**
  **11 rue Saint-Georges**
  **75009 Paris (FR)**

(56) Documents cités:
| WO-A-03/074445 | WO-A-2005/068393 |
| JP-A- 2000 302 560 | JP-A- 2003 292 382 |
| US-A- 4 507 394 | US-A- 5 466 643 |

## Description

L'invention concerne un nouveau produit réfractaire fondu et coulé à forte teneur en zircone.

Parmi les produits réfractaires, on distingue les produits fondus et coulés, bien connus pour la construction des fours de fusion du verre, et les produits frittés.

A la différence des produits frittés tels que décrits par exemple dans US 4 507 394, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. Le liquide fondu est ensuite coulé dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85 % en poids de zircone ($ZrO_2$), sont réputés pour leur qualité de très grande résistance à la corrosion sans coloration du verre produit et sans génération de défauts.

Classiquement, les produits fondus et coulés à forte teneur en zircone comportent également de l'oxyde de sodium ($Na_2O$) pour éviter la formation de zircon à partir de la zircone et de la silice présentes dans le produit. La formation de zircon est en effet néfaste puisqu'elle s'accompagne d'une diminution de volume de l'ordre de 20 %, créant ainsi des contraintes mécaniques à l'origine de fissures.

Le produit ER-1195 produit et commercialisé par la Société Européenne des Produits Réfractaires et couvert par le brevet EP-B-403 387 est aujourd'hui largement utilisé dans les fours de fusion du verre. Sa composition chimique comprend environ 94 % de zircone, 4 à 5 % de silice, environ 1 % d'alumine, 0,3 % d'oxyde de sodium et moins de 0,05 % en poids de $P_2O_5$. Elle est typique des produits à forte teneur en zircone utilisés pour les fours verriers.

FR 2 701 022 décrit des produits fondus et coulés à forte teneur en zircone qui contiennent 0,05 à 1,0 % en poids de $P_2O_5$ et 0,05 à 1,0 % en poids d'oxyde de bore $B_2O_3$. Ces produits présentent une résistivité électrique élevée. Cela permet avantageusement de stabiliser la consommation électrique lors de la fusion électrique du verre et surtout d'éviter tout problème de court circuit dans les réfractaires entraînant leur dégradation rapide. En effet, lors de la fusion électrique du verre une partie du courant électrique passe à travers les produits réfractaires. L'augmentation de la résistivité de ces produits réfractaires permet donc de réduire la quantité de courant électrique susceptible de les parcourir.

WO 2005 068393 décrit des produits fondus et coulés à forte teneur en zircone présentant une résistivité électrique élevée tout en minimisant les teneurs en BaO, SrO, MgO, CaO, $P_2O_5$, $Na_2O$ et $K_2O$. Ces produits contiennent 0,1 à 1,2 % en poids de $B_2O_3$.

JP 2000-302 560 décrit des produits fondus et coulés qui ne contiennent pas $Nb_2O_5$ ou $Ta_2O_5$.

L'actuel développement de verres de très haute qualité, en particulier des verres pour écrans plats de type LCD, augmente les exigences pour les produits réfractaires des fours de fusion du verre. En particulier, il existe un besoin pour des produits réfractaires présentant une résistivité électrique encore améliorée tout en conservant une bonne résistance à la corrosion par le verre fondu.

La présente invention vise à satisfaire ce besoin.

Plus particulièrement, elle concerne un produit réfractaire fondu et coulé à forte teneur en zircone comportant, en pourcentages massiques sur la base des oxydes et pour un total de plus de 98,5 %, de préférence de plus 99 % et de préférence encore de plus de 99,5 % :

- ZrO$_2$ + HfO$_2$: >85 %
- SiO$_2$: >10 % à 12 %
- Al$_2$O$_3$ : 0,1 % à 2,4 %
- B$_2$O$_3$ : < 1,5 %, et
- un dopant choisi dans le groupe formé par $V_2O_5$, $CrO_3$, $Nb_2O_5$, $MoO_3$, $Ta_2O_5$, $WO_3$ et leurs mélanges, en une quantité pondérée telle qu'exprimée par la formule (1) suivante :

$$0,2 \ \% \leq 2,43.V_2O_5 + 4,42.CrO_3 + 1,66.Nb_2O_5 + 3,07.MoO_3 + Ta_2O_5 + 1,91.WO_3$$

Comme on le verra plus loin, de manière surprenante, le produit réfractaire selon l'invention présente une résistivité électrique remarquable, tout en conservant une bonne résistance à la corrosion par le verre fondu.

De préférence, le produit réfractaire selon l'invention comporte encore une ou, de préférence, plusieurs, des caractéristiques optionnelles suivantes.

- La quantité pondérée de dopant est supérieure ou égale à 0,5 %, de préférence supérieure ou égale à 0,6 %, de préférence à 1,2 % et/ou inférieure ou égale à 3 %, de préférence à 2,5 %, de préférence inférieure ou égale à 1,4 %. La quantité totale de dopant est supérieure ou égale à 0,05 %, de préférence supérieure ou égale à 0,1 % et/ou inférieure ou égale à 0,5 %, de préférence inférieure ou égale à 0,4 %, en pourcentages molaires sur la base des oxydes.- Le dopant est choisi parmi $V_2O_5$, $Nb_2O_5$, $Ta_2O_5$, $WO_3$ et leurs mélanges, de préférence parmi $Nb_2O_5$, $Ta_2O_5$ et leurs mélanges.
- Dans un mode de réalisation, le dopant est $Nb_2O_5$. De préférence, la quantité massique de $Nb_2O_5$ est supérieure à 0,1 %.
- Dans un autre mode de réalisation, le dopant est un mélange de $Nb_2O_5$ et de $Ta_2O_5$, la quantité de $Nb_2O_5$ étant supérieure à 0,1 % et la quantité de $Ta_2O_5$ étant supérieure à 0,1 %, en pourcentages massiques sur la base des oxydes.
- La quantité de $B_2O_3$ est supérieure à 0,05 %, de préférence à 0,1 %, voire même supérieure à 0,25 %.
- La quantité massique d'oxyde de bore $B_2O_3$ est inférieure ou égale à 1,0 %, de préférence inférieure ou égale à 0,8 %.
- La quantité d'oxyde d'yttrium $Y_2O_3$ est inférieure ou égale à 1 %, de préférence inférieure à 0,5 %, de préférence encore inférieure à 0,2 %.
- La quantité d'alumine $Al_2O_3$ est supérieure ou égale à 0,4 %, de préférence supérieure ou égale à 0,5 %, de préférence supérieure ou égale à 0,6 % et/ou inférieure ou égale à 1,5 %, de préférence inférieure ou égale 1 %, de préférence encore inférieure ou égale à 0,85 %.
- La quantité massique d'oxyde de barium BaO est inférieure ou égale à 0,6 %, de préférence inférieure à 0,5 %.
- Les espèces autres que $ZrO_2$ + $HfO_2$, $SiO_2$, $B_2O_3$, $Al_2O_3$, $Y_2O_3$, BaO et dopant (constituant le complément à 100 %) représentent, en masse, moins de 1,5 %, de préférence moins de 1 %, de préférence encore moins de 0,5 %.
- Les espèces autres que $ZrO_2$ + $HfO_2$, $SiO_2$, $B_2O_3$, $Al_2O_3$, $Y_2O_3$, et dopant (constituant le complément à 100 %) représentent, en masse, moins de 1,5 %, de préférence moins de 1 %, de préférence encore moins de 0,5 %.
- Le complément massique à 100 % est constitué par des impuretés.
- La quantité d'impuretés (essentiellement les oxydes de fer, de titane, de phosphore, de sodium et de calcium) est inférieure à 0,6 %, de préférence à 0,3 %.
- La quantité massique d'oxyde de sodium $Na_2O$ est inférieure ou égale à 0,1 %, de préférence inférieure ou égale à 0,05 %, de préférence encore inférieure ou égale à 0,03 %.

Avantageusement, ces caractéristiques permettent d'améliorer encore la résistivité électrique et la résistance à la corrosion du produit selon l'invention.

Le produit réfractaire selon l'invention présente de préférence une résistivité électrique supérieure ou égale à 400 $\Omega$.cm, de préférence supérieure ou égale à 500 $\Omega$.cm, de préférence encore supérieure ou égale à 600 $\Omega$.cm à 1500 °C à la fréquence de 100Hz.

L'invention concerne également un four de fusion de verre comportant un produit réfractaire selon l'invention, ou un produit réfractaire fabriqué ou susceptible d'être fabriqué suivant un procédé selon l'invention, en particulier dans les régions destinées à être en contact avec le verre fondu. Dans le four selon l'invention, le produit réfractaire peut avantageusement faire partie d'une cuve de préparation de verre par fusion, notamment par fusion électrique, où il est susceptible d'entrer en contact avec du verre fondu à une température supérieure à 1200 °C.

Le produit réfractaire selon l'invention n'est pas prévu pour être mis en contact avec des verres fondus à des températures inférieures à 1100 °C.

L'invention concerne enfin un procédé de fabrication d'un produit réfractaire selon l'invention, comprenant les étapes successives suivantes :

a) mélange de matières premières, avec introduction d'un dopant, de manière à former une charge de départ,
b) fusion de ladite charge de départ jusqu'à obtention d'un liquide en fusion,
c) coulage et solidification dudit liquide en fusion, par refroidissement contrôlé, de manière à obtenir un produit réfractaire,

ce procédé étant remarquable en ce que lesdites matières premières sont choisies de manière que ledit produit réfractaire soit conforme à l'invention.

La teneur ou quantité « pondérée » en dopant désigne ici la quantité 2,43-$V_2O_5$+4,42.$CrO_3$+1,66.$Nb_2O_5$+3,07-$MoO_3$+$Ta_2O_5$+1,91.$WO_3$ où les teneurs en oxydes sont exprimées en pourcentages massiques.

Sauf mention contraire, tous les pourcentages de la présente description sont des pourcentages massiques sur la base des oxydes.

Dans les produits fondus et coulés selon l'invention, la forte teneur en zircone, c'est-à-dire $ZrO_2 > 85$ %, permet de répondre aux exigences de haute résistance à la corrosion sans coloration du verre produit ni génération de défauts nuisibles à la qualité de ce verre.

L'oxyde d'hafnium, $HfO_2$, présent dans le produit selon l'invention est l'oxyde d'hafnium naturellement présent dans les sources de zircone. Sa teneur dans le produit selon l'invention est donc inférieure ou égale à 5 %, généralement inférieure ou égale à 2 %.

La présence de silice est nécessaire à la formation d'une phase vitreuse intergranulaire permettant d'accommoder de manière efficace les variations de volume de la zircone lors de sa transformation allotropique réversible, c'est-à-dire lors du passage de la phase monoclinique à la phase tétragonale. La teneur en silice peut être supérieure à 10,1 %, voire supérieure à 10,5 %.

La présence d'alumine est nécessaire à la formation d'une phase vitreuse stable et à la bonne coulabilité des produits dans le moule. Une teneur excessive entraîne une instabilité de la phase vitreuse (formation de cristaux).

L'oxyde d'yttrium $Y_2O_3$ a un effet défavorable sur la résistivité électrique, mais sa présence peut être tolérée en quantité inférieure à 1 %, de préférence inférieure à 0,5 %, de préférence encore à 0,2 %.

La présence de dopant est nécessaire dans les produits de l'invention pour améliorer la résistivité électrique. Cependant la teneur totale pondérée de ces oxydes ne doit pas, de préférence, dépasser 4 % pour que le pourcentage de zircone soit maintenu à un niveau suffisamment élevé pour assurer une excellente résistance à la corrosion par le verre en fusion et conserver une bonne stabilité de la phase vitreuse.

Les inventeurs ont constaté que tous les dopants pentavalents ont un effet sensiblement identique à quantités molaires identiques. Il en est de même pour tous les dopants hexavalents. De plus, les inventeurs ont observé une efficacité molaire environ deux fois plus importante pour les dopants hexavalents $M^{6+}$ que pour que les dopants pentavalents $M^{5+}$. Sans être liés par une théorie, les inventeurs expliquent cette différence par le rôle des dopants vis-à-vis des lacunes en oxygène de la zircone. Les dopants hexavalents $M^{6+}$ compenseraient en effet deux lacunes en oxygène contre une seule pour les dopants pentavalents $M^{5+}$. Une mole d'oxyde d'un dopant pentavalent $M_2O_5$ aurait donc un effet identique à une mole d'oxyde d'un dopant hexavalent $MO_3$.

Dans la quantité pondérée en dopant, il convient également de tenir compte des différences entre les masses molaires des dopants. Ainsi 1,66 grammes de $Ta_2O_5$ ont un effet équivalent à un gramme de $Nb_2O_5$.

Le complément à 100 % dans la composition du produit selon l'invention est constitué par les autres espèces. On entend par « autres espèces », des espèces dont la présence n'est pas particulièrement souhaitée et qui sont généralement présentes à titre d'impuretés dans les matières premières.

On peut citer les oxydes alcalins, en particulier l'oxyde de sodium $Na_2O$ et l'oxyde de potassium $K_2O$, qui peuvent être tolérés mais ne doivent pas, de préférence, dépasser 0,5 %, de préférence 0,1 %, de préférence encore n'être présents que sous forme de traces. Sinon la résistivité électrique serait dégradée en raison de la conductivité accrue de la phase vitreuse. Les oxydes de fer, de titane et de phosphore sont connus pour être néfastes et leur teneur doit être limitée à des traces introduites à titre d'impuretés avec les matières premières. De préférence, la quantité de $Fe_2O_3$ + $TiO_2$ est inférieure à 0,55 % et celle de $P_2O_5$ est inférieure à 0,05 %.

Un produit selon l'invention peut être fabriqué suivant les étapes a) à c) décrites ci-dessous :

a) mélange de matières premières, avec introduction d'un dopant, de manière à former une charge de départ,
b) fusion de ladite charge de départ jusqu'à obtention d'un liquide en fusion,
c) solidification dudit liquide en fusion, par refroidissement contrôlé de manière à obtenir un produit réfractaire selon l'invention.

A l'étape a), l'ajout de dopant est réalisé de manière à garantir une teneur en dopant dans le produit fini conforme à l'invention.

A l'étape b), la fusion est de préférence réalisée grâce à l'action combinée d'un arc électrique assez long, ne produisant pas de réduction, et d'un brasage favorisant la réoxydation des produits. La fusion s'opère à une température supérieure à 2300 °C, de préférence entre 2400 et 2500 °C.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1208577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le refroidissement est de préférence effectué à une vitesse inférieure à 20 °C par heure, de préférence à la vitesse d'environ 10 °C par heure.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle du produit selon l'invention.

Par exemple, l'utilisation d'un four à induction à fusion et solidification continues, comme décrit dans FR 1 430 962, est possible et permet de fabriquer des produits dont la teneur en zircone est particulièrement homogène.

Le produit de l'invention est constitué de grains de zircone qui, pour plus de 80 %, plus de 90 %, plus de 99 % ou sensiblement 100 % est monoclinique non stabilisée, entourés par une phase vitreuse constituée pour plus de 50 %, plus de 70 %, voire plus de 90 %, ou pour sensiblement 100 % de silice, en pourcentages massiques.

Les produits de l'invention pourront avantageusement être utilisés dans toute autre application nécessitant un produit réfractaire ayant une résistivité électrique élevée.

Bien entendu, la présente invention n'est pas limitée aux modes de réalisation décrits et représentés fournis à titre d'exemples illustratifs et non limitatifs.

Les exemples non limitatifs suivants sont donnés dans le but d'illustrer l'invention.

Dans ces exemples, on a employé les matières premières suivantes :

- de la zircone contenant principalement, en moyenne massique, 98,5 % de $ZrO_2$ + $HfO_2$, 0,2 % de $SiO_2$ et 0,02 % de $Na_2O$,
- du sable de zircon à 33 % de silice,
- de l'alumine de type AC44 vendue par la société Pechiney et contenant en moyenne 99,4 % d'alumine $Al_2O_3$,
- des oxydes de barium, bore, yttrium, tantale $Ta_2O_5$ et de niobium $Nb_2O_5$ de pureté supérieure à 99 %.

Les exemples ont été préparés selon le procédé classique de fusion en four à arc puis coulés pour obtenir des blocs de format 220x450x150mm.

L'analyse chimique des produits obtenus est donnée dans le tableau 1 ; il s'agit d'une analyse chimique moyenne, donnée en pourcentages massiques à l'exception de la colonne indiquant le pourcentage molaire de la somme des oxydes $Ta_2O_5$ et $Nb_2O_5$.

Dans ce tableau, une case vide correspond à une quantité inférieure ou égale à 0,05 % massique.

La teneur en $Na_2O$ n'est pas indiquée, elle est toujours inférieure à 0,05 % massique.

Sur les différents exemples de blocs réalisés, des barreaux cylindriques de produit de 30 mm de diamètre et de 30 mm de hauteur ont été soumis à une différence de potentiel de 1 volt à une fréquence de 100 Hertz à 1500 °C pour réaliser des mesures de résistivité électrique R.

Tableau 1

| | $ZrO_2$ | $SiO_2$ | $B_2O_3$ | $Al_2O_3$ | $Nb_2O_5$ | $Y_2O_3$ | BaO | $Ta_2O_5$+N $b_2O_5$ (mol %) | R ($\Omega$.cm) |
|---|---|---|---|---|---|---|---|---|---|
| 1 | 87,6 | 10,2 | 0,53 | 0,53 | 0,80 | 0,19 | 0,10 | 0,33 | 813 |
| 2 | 87,4 | 10,8 | 0,89 | 0,54 | 0,20 | 0,18 | 0,03 | 0,08 | 1348 |
| 3 | 87,3 | 11,2 | 0,60 | 0,54 | 0,16 | 0,17 | 0,02 | 0,07 | 1165 |

**Revendications**

1. Produit réfractaire fondu et coulé à forte teneur en zircone, comportant, en pourcentages massiques sur la base des oxydes et pour un total de plus de 88,5 % :

- $ZrO_2$ + $HfO_2$ : > 85 %
- $SiO_2$: >10 % à 12 %
- $Al_2O_3$ : 0,1 % à 2,4 %
- $B_2O_3$ : < 1,5 %, et
- un dopant choisi dans le groupe formé par $V_2O_5$, $CrO_3$, $Nb_2O_5$, $MoO_3$, $Ta_2O_5$, $WO_3$, et leurs mélanges, en une quantité pondérée telle que

$$0,2 \% \leq 2,43 \cdot V_2O_5 + 4,42 \cdot CrO_3 + 1,66 \cdot Nb_2O_5 + 3,07 \cdot MoO_3 + Ta_2O_5 + 1,91 \cdot WO_3$$

**2.** Produit réfractaire selon l'une quelconque des revendications précédentes, dans lequel la quantité pondérée de dopant est supérieure ou égale à 0,5 % et/ou inférieure ou égale à 3 %.

**3.** Produit réfractaire selon l'une quelconque des revendications précédentes, dans lequel la quantité pondérée de dopant est supérieure ou égale à 0,6 % et/ou inférieure ou égale à 1,4 %.

**4.** Produit réfractaire selon l'une quelconque des revendications précédentes, dans lequel le dopant est choisi parmi $Nb_2O_5$, $Ta_2O_5$, $WO_3$ et leurs mélanges.

**5.** Produit réfractaire selon l'une quelconque des revendications précédentes, dans lequel le dopant est choisi parmi $Nb_2O_5$, $Ta_2O_5$ et leurs mélanges.

**6.** Produit réfractaire selon l'une quelconque des revendications précédentes, dans lequel la quantité de $B_2O_3$ est supérieure à 0,05% et/ou inférieure à 1%.

**7.** Produit réfractaire selon l'une quelconque des revendications précédentes, comportant en outre $Y_2O_3$, la quantité de $Y_2O_3$ étant inférieure ou égale à 1 %.

**8.** Produit réfractaire selon l'une quelconque des revendications précédentes, présentant une teneur en alumine ($Al_2O_3$) inférieure ou égale à 1 %, en pourcentage massique sur la base des oxydes.

**9.** Produit réfractaire selon la revendication précédente, présentant une teneur en alumine ($Al_2O_3$) inférieure ou égale à 0,85 %, en pourcentage massique sur la base des oxydes, et/ou supérieure ou égale à 0,4 %, en pourcentage massique sur la base des oxydes.

**10.** Produit réfractaire selon l'une quelconque des revendications précédentes, comportant en outre $Na_2O$, la teneur en $Na_2O$ étant inférieure à 0,1%.

**11.** Produit réfractaire selon l'une quelconque des revendications précédentes, constitué de grains de zircone qui, pour plus de 80% est monoclinique non stabilisée, entourés par une phase vitreuse constituée pour plus de 50% de silice, en pourcentages massiques.

**12.** Four de fusion du verre, **caractérisé en ce qu'**il comporte un produit réfractaire selon l'une quelconque des revendications 1 à 11.

**13.** Four selon la revendication précédente, ledit produit réfractaire faisant partie d'une cuve de préparation de verre par fusion électrique, où il est susceptible d'entrer en contact avec du verre fondu à une température supérieure à 1200 °C.


**Patentansprüche**

**1.** Feuerfestprodukt, welches geschmolzen und gegossen ist, mit einem starken Anteil an Zirkonoxid, welches in Massenprozent auf der Basis von Oxiden und für eine Gesamtheit von mehr als 98,5% aufweist:

  - $ZrO_2$ + $HfO_2$: > 85%
  - $SiO_2$: > 10% bis 12%
  - $Al_2O_3$: 0,1% bis 2,4%
  - $B_2O_3$: < 1,5%, und
  - ein Dotierungselement, welches aus der Gruppe gewählt ist, die durch $V_2O_5$, $CrO_3$, $Nb_2O_5$, $MoO_3$, $Ta_2O_5$, $WO_3$ und ihren Mischungen gebildet ist, in einer Gewichtsmenge, derart, dass

$$0,2\% \leq 2,43.\ V_2O_5 + 4,42.CrO_3 + 1,66.Nb_2O_5 + 3,07.MoO_3 + Ta_2O_5$$

$$+ 1,91.WO_3 \text{ ist.}$$

**2.** Feuerfestprodukt nach dem vorhergehenden Anspruch, in welchem die Gewichtsmenge des Dotierungselements größer oder gleich 0,5% und/oder kleiner oder gleich 3 % ist.

3. Feuerfestprodukt nach einem der vorhergehenden Ansprüche, in welchem die Gewichtsmenge des Dotierungselements größer oder gleich 0,6% und/oder kleiner oder gleich 1,4% ist.

4. Feuerfestprodukt nach einem der vorhergehenden Ansprüche, in welchem das Dotierungselement ausgewählt ist aus $Nb_2O_5$, $Ta_2O_5$, $WO_3$ und ihren Mischungen.

5. Feuerfestprodukt nach einem der vorhergehenden Ansprüche, in welchem das Dotierungselement ausgewählt ist aus $Nb_2O_5$, $Ta_2O_5$ und ihren Mischungen.

6. Feuerfestprodukt nach einem der vorhergehenden Ansprüche, in welchem die Menge an $B_2O_3$ größer als 0,05% und/oder kleiner als 1 % ist.

7. Feuerfestprodukt nach einem der vorhergehenden Ansprüche, bestehend unter anderem aus $Y_2O_3$, wobei die Menge an $Y_2O_3$ kleiner oder gleich 1 % beträgt.

8. Feuerfestprodukt nach einem der vorhergehenden Ansprüche, welches einen Gehalt an Aluminiumoxid ($Al_2O_3$) aufweist, der kleiner oder gleich 1% in Massenprozent auf der Basis von Oxiden ist.

9. Feuerfestprodukt nach dem vorhergehenden Anspruch, welches einen Gehalt an Aluminiumoxid ($Al_2O_3$) aufweist, der kleiner oder gleich 0,85% ist in Massenprozent auf der Basis von Oxiden, und/oder größer oder gleich 0,4% in Massenprozent auf der Basis von Oxiden ist.

10. Feuerfestprodukt nach einem der vorhergehenden Ansprüche, welches unter anderem $Na_2O$ aufweist, wobei der Gehalt an $Na_2O$ kleiner als 0,1% ist.

11. Feuerfestprodukt nach einem der vorhergehenden Ansprüche, gebildet aus Zirkonoxidkörnern, die für mehr als 80% monoklinisch, nicht stabilisiert sind, umgeben von einer glasartigen Phase, welche aus mehr als 50% Siliziumoxid in Massenprozent gebildet ist.

12. Glasschmelzofen, **dadurch gekennzeichnet, dass** er ein Feuerfestprodukt nach einem der Ansprüche 1 bis 11 aufweist.

13. Ofen nach dem vorhergehenden Anspruch, bei dem das Feuerfestprodukt Teil einer Wanne zur elektrischen Glasschmelzzubereitung bildet, wo es fähig ist, in Kontakt mit dem geschmolzenen Glas bei einer Temperatur größer als 1200°C zu gelangen.

**Claims**

1. A fused cast refractory product with a high zirconia content comprising, as a percentage by weight based on the oxides and for a total of more than 98.5%:

   • $ZrO_2$ + $HfO_2$: > 85%;
   • $SiO_2$: > 10% to 12%;
   • $Al_2O_3$: 0.1% to 2.4%;
   • $B_2O_3$: < 1.5%; and
   • a dopant selected from the group formed by $V_2O_5$, $CrO_3$, $Nb_2O_5$, $MoO_3$, $Ta_2O_5$, $WO_3$, and mixtures thereof, in a weighted quantity such that

$$0.2\% \leq 2.43\ V_2O_5 + 4.42\ CrO_3 + 1.66\ Nb_2O_5 + 3.07\ MoO_3 + Ta_2O_5 + 1.91\ WO_3.$$

2. A refractory product according to any preceding claim, in which the weighted quantity of dopant is 0.5% or more and/or 3% or less.

3. A refractory product according to any preceding claim, in which the weighted quantity of dopant is 0.6% or more and/or 1.4% or less.

4. A refractory product according to any preceding claim, in which the dopant is selected from $Nb_2O_5$, $Ta_2O_5$, $WO_3$ and mixtures thereof.

5. A refractory product according to any preceding claim, in which the dopant is selected from $Nb_2O_5$, $Ta_2O_5$ and mixtures thereof.

6. A refractory product according to any preceding claim, in which the quantity of $B_2O_3$ is more than 0.05% and/or less than 1%.

7. A refractory product according to any preceding claim, further including $Y_2O_3$, the quantity of $Y_2O_3$ being 1% or less.

8. A refractory product according to any preceding claim, in which the alumina content ($Al_2O_3$) is 1% or less, as a percentage by weight based on the oxides.

9. A refractory product according to the preceding claim, in which the alumina ($Al_2O_3$) content is 0.85% or less, as a percentage by weight based on the oxides, and/or is 0.4% or more, as a percentage by weight based on the oxides.

10. A refractory product according to any preceding claim, further including $Na_2O$, the $Na_2O$ content being less than 0.1%.

11. A refractory product according to any preceding claim, made of grains of zirconia which, for more than 80% is non-stabilized monoclinic, surrounded by a glass phase made of more than 50% of silica, as percentages by weight.

12. A glass-melting furnace, **characterized in that** it includes a refractory product according to any one of claims 1 to 11.

13. A furnace according to the preceding claim, said refractory product forming part of a tank for preparing glass by electrical melting, where it is susceptible of coming into contact with molten glass at a temperature of more than 1200°C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4507394 A
- EP 403387 B
- FR 2701022
- WO 2005068393 A
- JP 2000302560 A
- FR 1208577
- FR 75893
- FR 82310
- FR 1430962